# EUROPEAN PATENT SPECIFICATION

(11) **EP 4 419 238 B1**
(45) Date of publication and mention of the grant of the patent: **25.06.2025**
(21) Application number: 22801843.8
(22) Date of filing: 13.10.2022
(51) Int. Cl.: B01D 53/62, A62D 3/36, A62D 3/37, B01D 53/75, B01D 53/80, B09B 3/80

(54) **A METHOD AND A SYSTEM FOR MANUFACTURING CARBONOUS MATERIAL**
VERFAHREN UND SYSTEM ZUR HERSTELLUNG VON KOHLENSTOFFHALTIGEM MATERIAL
PROCÉDÉ ET SYSTÈME DE FABRICATION UN MATÉRIAU CARBONÉ

(30) Priority: 19.10.2021 FI 20216075
(43) Date of publication of application: 28.08.2024
(73) Proprietor: Valmet Technologies Oy, 02150 Espoo (FI)
(72) Inventor: JAKONEN, Jere, 33900 TAMPERE (FI); SILVENNOINEN, Jaani, 33900 TAMPERE (FI); ROPPO, Juha, 33900 TAMPERE (FI)
(74) Representative: Berggren Oy
(86) International application number: PCT/FI2022/050681
(87) International publication number: WO 2023/067243

(56) References cited:
- JP-A- 2002 086 097
- US-A- 5 431 825
- US-A1- 2009 202 410
- US-A1- 2021 069 641

## Description

### Technical field

The present invention relates to the production of carbonous material from a carbonatable substance. The present invention also relates to stabilization of materials, particularly stabilizing heavy metals of carbonatable material, such that the carbonous material comprises a stabilized form of the carbonatable material. The present invention also relates to removal of harmful elements from carbonatable material. The present invention also relates to the production of carbonous material from ash or air pollution control residue using flue gas for carbonation of the ash or air pollution control residue and stabilizing these materials.

### Background

Nowadays many types of industrial wastes are disposed. E.g. ash, particularly fly ash, is commonly treated as waste in the power plants and just simply disposed. However, disposal has costs, for example waste taxes or treatment fees, which causes losses for the operator. For this and environmental reasons circular economy has become increasingly popular. Accordingly, materials are preferably utilized again and again. This has created demand for circulated waste material. Common applications are e.g. to use as in road base or as an ingredient in cement or concrete.

Industrial waste, such as ashes from combustion of recycled wood, waste, or waste derived fuels, often contain increased amount of heavy metals and salts as chlorides and sulphates. These compounds may be hazardous. Often these substances are leachable, whereby, in use, these substances may leach from the material thereby causing environmental problems. Therefore these hazardous elements should be removed or stabilized before possible utilization of ashes. Stabilization herein means mainly reducing leachability. After the treatment, waste could be used in for example cement or construction industry or landfilling as a material. Moreover, even if treated as waste (e.g. disposed), the cost of disposal may depend on the fulfilment of waste acceptance criteria for landfilling.

Document JP 2002/086097 A discloses a method for treating fly ash comprising the steps of carbonating the fly ash by contacting it with carbon dioxide and stabilizing the carbonated fly ash by adding a stabilizer comprising iron.

### Summary

It has been found that the waste material can be stabilized to reduce leachability of its constituents. Furthermore, some of harmful components are removed before stabilization. Stabilization comprises two steps. A first step involving carbonation and a second step involving stabilization with a stabilizer. For the latter, the stabilizer comprises iron (Fe), i.e. elementary iron or iron comprised by a compound. It has also been found that such a stabilizer functions well, when a pH of the substance to be stabilized is not too high.

Moreover, carbonation (wet or semi-dry) is used to stabilize harmful components from the feedstock in the first step of stabilization. This has the benefit that before using the stabilizer, a pH of the waste is lowered by carbonation with carbon dioxide (CO₂). Carbonation has the further benefit that it also reduces leachability by forming various compounds (e.g. carbonates) with the waste material. In addition, dewatering after wet carbonation is utilized to remove some harmful components from the feedstock before stabilization, these harmful components having been leached during wet carbonation. Furthermore, some of the CO₂ of the climate can thus bound to the carbonous material.

It is also noted that even if the stabilized material would not be utilized, it is possible to stabilize the waste material to form less hazardous waste. For example, hazardous ash waste can be can be stabilized to non-hazardous waste via reclassification. Additionally, the treated ash could meet the limits of waste acceptance criteria for landfilling better. This reduces operational costs, even if the non-hazardous or inert ash waste would not be utilized in any way.

Hereinafter the waste material is referred to as a solid composition. Before carbonating with CO₂, the solid composition is mixed with water. Therefore, the carbonation is a wet or semi-dry carbonation. Preferably, the carbonation is a wet carbonation. In the carbonation, the pH of the mixture is lowered and, typically, carbonates are formed. Thereafter, the stabilizer comprising iron (Fe), i.e. elemental iron or as part of a compound comprising iron, is used to stabilize the material. A method for manufacturing carbonous material is disclosed in more specific terms in claim 1. A corresponding system is disclosed in claim 15.

### Brief description of the drawings

- Fig. 1a: shows a method for manufacturing carbonous material, the method comprising carbonation and stabilization with a stabilizer,
- Fig. 1b: shows a method for manufacturing carbonous material, wherein the material to be carbonated is mixed, i.e. pulped, in a pre-treatment unit before carbonation,
- Fig. 1c: shows a method for manufacturing carbonous material, wherein the carbonation is performed in two phases,
- Fig. 1d: shows a method for manufacturing carbonous material, wherein the carbonation is performed in three phases,
- Fig. 2a: shows a method for manufacturing carbonous material, wherein the carbonated mixture is dewatered before stabilization with the stabilizer,
- Fig. 2b: shows a method for manufacturing carbonous material, wherein the carbonated mixture is dewatered before stabilization with the stabilizer and the stabilized material is also dewatered,
- Fig. 2c: shows a method for manufacturing carbonous material, wherein the stabilized material is dewatered,
- Fig. 3: shows a method for manufacturing carbonous material, wherein flue gas is used as carbonating fluid in the carbonation,
- Fig. 4: shows a method for manufacturing carbonous material, wherein cleaned flue gas is used as carbonating fluid in three phases of carbonation, and
- Fig. 5: shows a method for manufacturing carbonous material, wherein cleaned flue gas is used as carbonating fluid in three phases of carbonation, and the material is dewatered before and after the stabilization.

### Detailed description

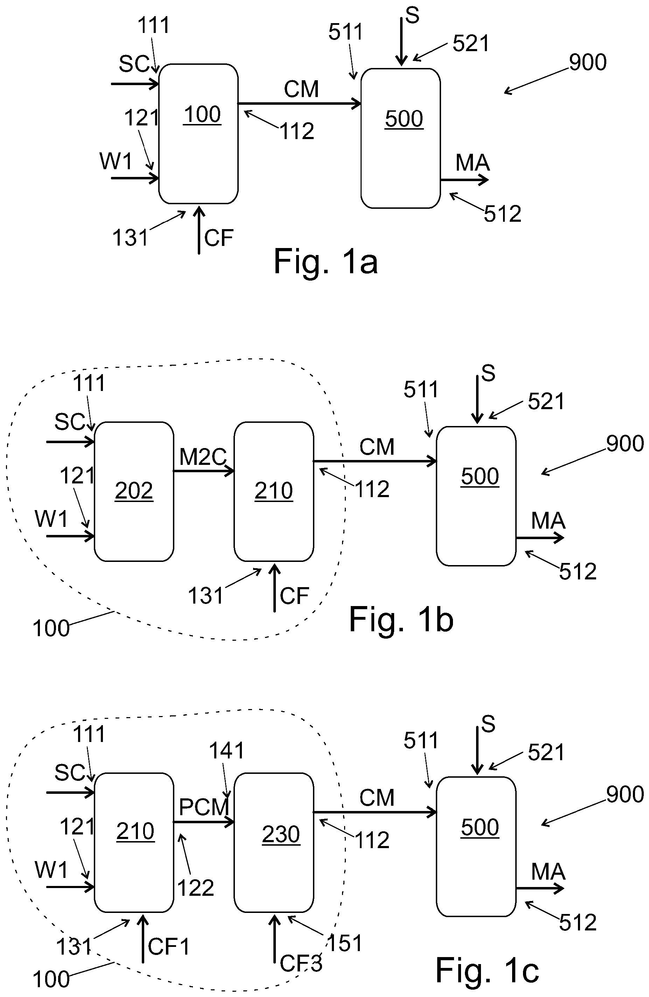

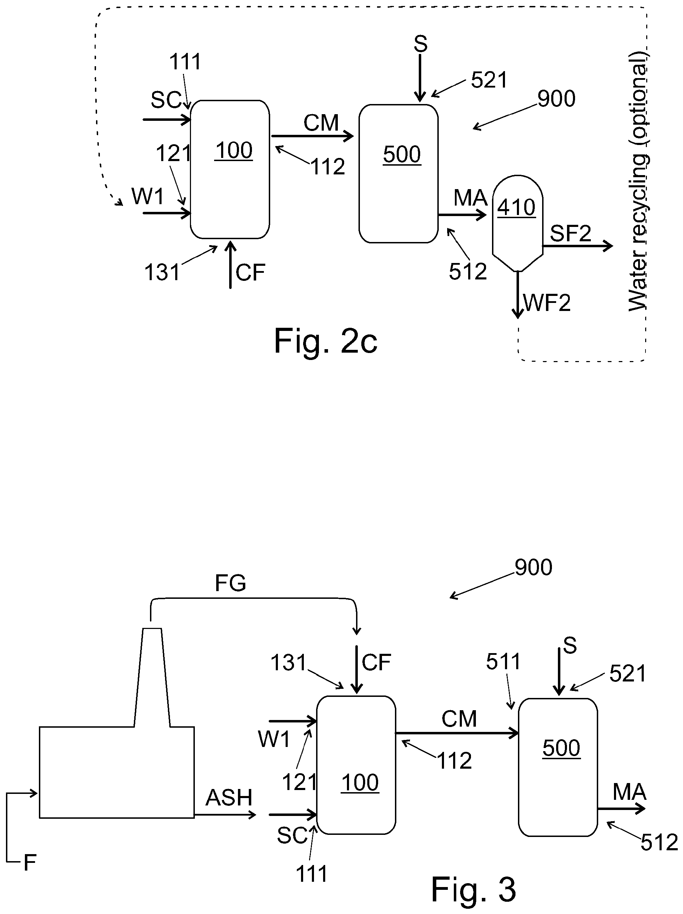

Figure 1a shows a method for manufacturing carbonous material. The term carbonous material refers to a material formed by carbonation. As will be detailed below, according to a first aspect of the invention the carbonous material is also stabilized with a stabilizer in the method. As a result of the process, a mixture MA comprising the carbonous material is produced. Water may be separated from the mixture MA to obtain dewatered carbonous material (i.e. a second solid fraction SF2, as in Fig. 2c). The carbonous material is manufactured from a solid composition SC. As indicated above, the solid composition may be or comprise an industrial waste or a by-product of an industrial process, such as ash (particularly fly ash), air pollution control residue, or residues from metal industry or cement industry.

The method comprises mixing the solid composition SC with first water W1. In this way, a carbonatable mixture M2C is formed. In general, the term carbonatable mixture refers to a mixture that can be carbonated. Carbonation is possible, when the solid composition SC comprises a compound comprising an element selected from the Group I or II of the periodic table of elements excluding hydrogen. Thus, the solid composition SC comprises a compound comprising at least one of the following elements: lithium, sodium, potassium, rubidium, caesium, francium, beryllium, magnesium, calcium, strontium, barium, and radium. It may, but need not, comprise also hydrogen. In general, when such a compound is mixed with water, the mixture is alkaline, and therefore can be carbonated; i.e. the mixture is carbonatable. For these reasons, after mixing the first water W1, a pH of the carbonatable mixture M2C is preferably more than 9. More preferably, the first water W1 and the solid composition SC are mixed in such a way that a pH of the carbonatable mixture M2C is more than 10. In particular, when a pre-treatment unit 202 is used to form the carbonatable mixture M2C, the pH of the carbonatable mixture M2C can easily be measured before carbonation (see Fig. 1b). In the alternative, the process may be of a batch type (see e.g. Fig. 1a), and the pH of the mixture of solid composition SC and first water W1 may have a pH of more than 9, e.g. more than 10, before carbonation. During carbonation, the pH decreases. Naturally, a carbonatable mixture forms also in the embodiment of Fig. 1a by mixing of the first water W1 and the solid composition SC.

Carbonation of the carbonatable mixture M2C is performed by adding to it carbonating fluid CF. Herein the term "fluid" refers to a substance that is in gaseous form or in liquid form or of which a part is in gaseous form and another part in liquid form (e.g. saturated mixture). The carbonating fluid CF comprises at least 1 vol % carbon dioxide CO₂. Preferably, carbonating fluid CF comprises at least 5 vol % carbon dioxide CO₂. This applies to all different carbonating fluids CF1, CF2, CF3 usable in the process, which will be discussed below.

Carbonating with the carbonating fluid CF has two functions:
(1) Carbon dioxide forms carbonates with the Group I or II elements of the solid composition SC, e.g. calcium, magnesium, sodium, potassium; and also forms carbonates with different heavy metals of the solid composition SC, which decreases the leachability of the harmful elements (heavy metals or their carbonates). Moreover, the pH of solid composition is decreased by carbonation which influences on the leaching of heavy metals as well. Carbon dioxide as a weak acid does not remove all the alkalinity of the carbonatable mixture M2C and hence it creates a buffer for the treated solid composition. This buffer resists the change of pH and is thus favourable property for the treated carbonous material. It guarantees that the treatment is also complete in longer term. Thus, the carbonation stabilizes, to some extent, the components of the solid composition SC.
(2) Harmful components including chromium and antimony can be stabilized using a stabilizer S comprising iron (Fe) particularly well, when the pH of the mixture that is stabilized is not too high. This happens, because in such an environment the stabilizer S is usable for reducing the harmful compounds. E.g. chromium (VI) can be reduced to chromium (III)

For these reasons, the carbonatable mixture M2C is carbonated to form a carbonated mixture CM such that a pH of the carbonated mixture CM is less than 9. Preferably, the pH of the carbonated mixture CM is less than 8, such as from 6.0 to 8.0, preferably from 6.5 to 8.0. The term "carbonated mixture CM" is used for the wet or semi-dry material after carbonation. When carbonation is done in phases, the term carbonated mixture refers to the wet or semi-dry material after the last carbonation phase.

Using carbon dioxide for carbonation has the further benefit that in this way some of the climate's CO₂ can be captured. Furthermore, ash is produced in a process that produces also CO₂ to flue gases. Thus, CO₂ is commonly available for carbonation in the form of flue gases, when the solid composition SC comprises ash. However, other forms of CO₂ and/or solid compositions can also be used.

Concerning a first aspect, the first aspect including stabilization with the stabilizer S, at least a part of the carbonated mixture CM is stabilized with the stabilizer S to form the carbonous material.

Concerning a second aspect, the second aspect including multi-phase carbonation, but not necessarily including stabilization with a stabilizer, the carbonous material is comprised by the carbonated mixture CM.

Referring to Fig. 1a, the solid composition SC, the first water W1, and the carbonating fluid CF are fed to a primary reactor arrangement 100 for carrying out the carbonation of the solid composition SC. Forming the carbonatable mixture M2C and carbonating it may be performed in one reactor as in Fig. 1a. In Fig. 1c, the carbonatable mixture M2C is formed and partially carbonated in a primary first reactor 210. However, as detailed in Fig. 1b, the solid composition SC may be mixed with the first water W1 in a pre-treatment unit 202 to form the carbonatable mixture M2C. Then the carbonatable mixture M2C and the carbonating fluid CF can be fed to a primary first reactor 210 for carbonating the carbonatable mixture M2C.

Referring to Fig. 1c, the carbonatable mixture M2C can first be partly carbonated in a primary first reactor 210 (irrespective of whether the carbonatable mixture M2C is formed in a separate pre-treatment unit 202 as in Fig. 1b or not) using a primary carbonating fluid CF1 to form a partly carbonated mixture PCM. What has been said about the carbonating fluid CF applies to the primary carbonating fluid CF1. Thereafter, the partly carbonated mixture PCM may be further carbonated in a primary last reactor 230 using a last carbonating fluid CF3 to form the carbonated mixture CM. What has been said about the carbonating fluid CF applies to the last carbonating fluid CF3.

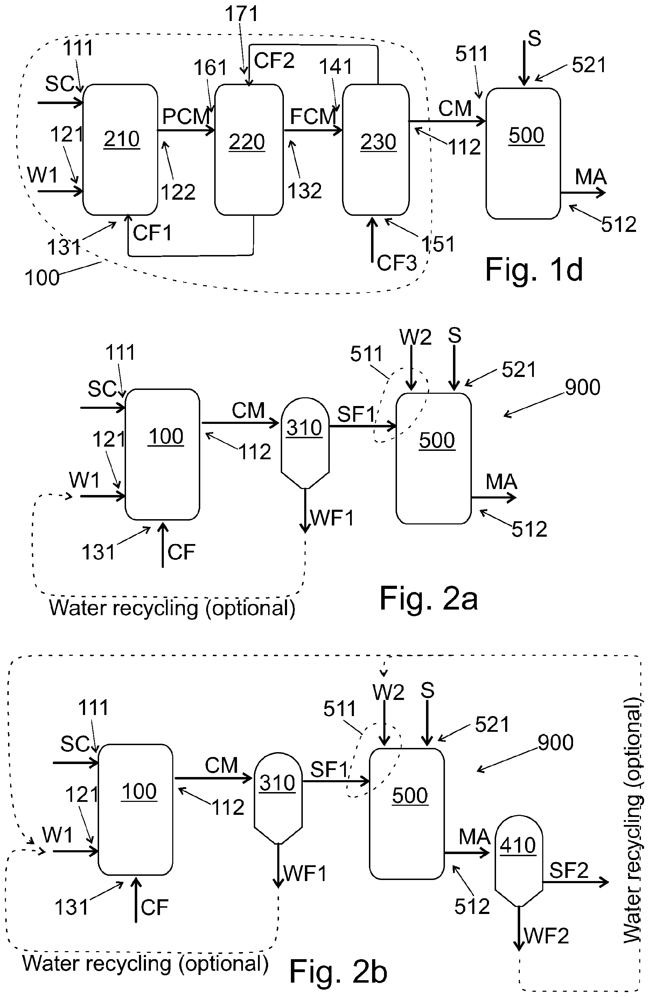

Referring to Fig. 1d, carbonating can be done is three phases. In Fig. 1d, the partly carbonated mixture PCM is further carbonated in a primary second reactor 220 using a secondary carbonating fluid CF2 to form further carbonated mixture FCM. What has been said about the carbonating fluid CF applies to the secondary carbonating fluid CF2. Thereafter, the further carbonated mixture FCM may be further carbonated in the primary last reactor 230 using a last carbonating fluid CF3 (i.e. a tertiary carbonating fluid CF3) to form the carbonated mixture CM. In this case, the primary last reactor 230 is also a primary third reactor.

Thus, referring to Figs. 1b and 1c, an embodiment comprises, in a first phase, adding primary carbonating fluid CF1 to the carbonatable mixture M2C to carbonate the carbonatable mixture M2C to form partly carbonated mixture PCM, the primary carbonating fluid comprising at least 1 vol %, preferably at least 5 vol %, carbon dioxide CO₂. The embodiment comprises transferring the partly carbonated mixture PCM to a second phase, and in the second phase, adding secondary carbonating fluid (CF2, CF3) to the partly carbonated mixture PCM to carbonate the partly carbonated mixture to form the carbonated mixture CM or further carbonated mixture FCM, the secondary carbonating fluid (CF2, CF3) comprising at least 1 vol %, preferably at least 5 vol %, carbon dioxide CO₂.

Referring to Fig 1c, the embodiment may further comprise transferring the further carbonated mixture FCM to a third phase, and in the third phase, adding tertiary carbonating fluid CF3 to the further carbonated mixture FCM to carbonate the further carbonated mixture FCM to form the carbonated mixture CM, the tertiary carbonating fluid CF3 comprising at least 1 vol %, preferably at least 5 vol %, carbon dioxide CO₂.

As discussed above, the term "carbonated mixture CM" refers to the material after a last carbonation phase (i.e. the last reactor in the primary reactor arrangement 100). Naturally, the carbonation may be done in more than three phases or reactors. Thus, the last reactor may be e.g. a fourth, fifth, or sixth in a sequence of reactors. Having carbonation done in at least two phases allows to utilize smaller reactors, which typically are vessels of some kind. Moreover, it enhances mixing of carbonating fluid and solids. Thus, it enhances carbonation in this way improving also the stabilization of the carbonation. According to the second aspect, carbonation may be done in at least two phases even if the sludge is not stabilized with the stabilizer S.

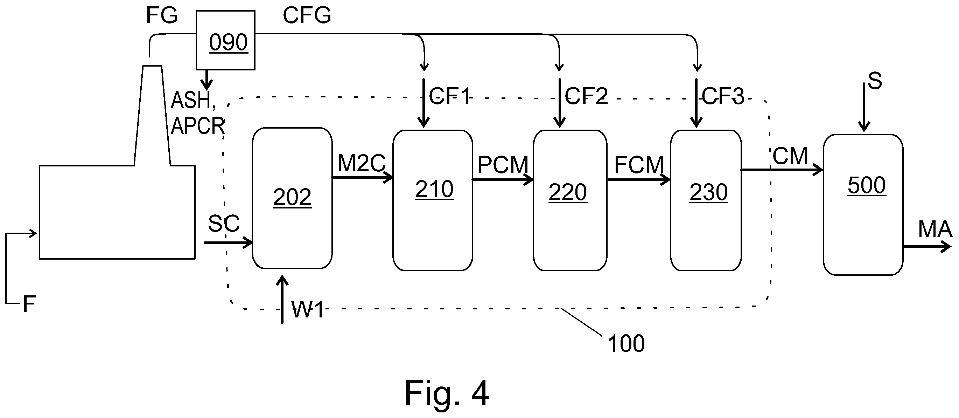

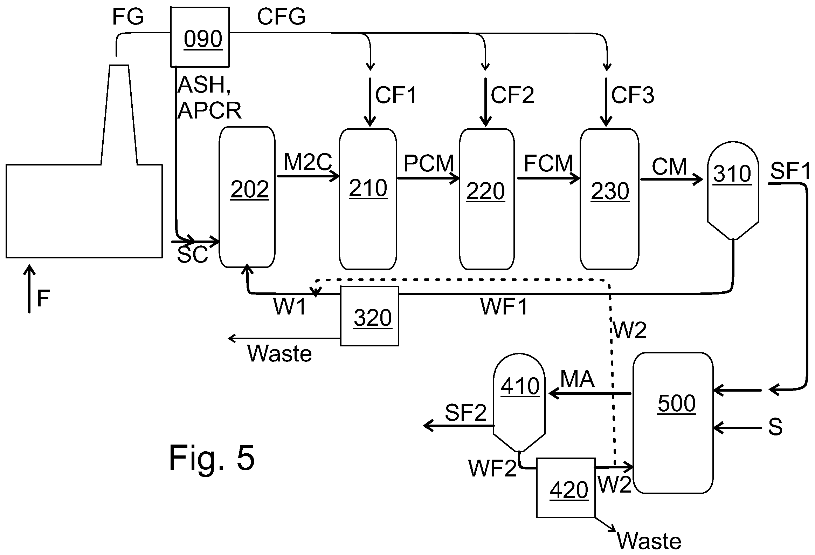

As indicated in Fig. 1d, it is possible to collect excess carbonating fluid (i.e. carbonating gas) from the primary last reactor 230 and use the gas as the second carbonating fluid CF2 in the primary second reactor 220. Moreover, it is possible to collect excess carbonating fluid (i.e. carbonating gas) from the primary second reactor 220 and use the gas as the first carbonating fluid CF1 in the primary first reactor 210. Even if not shown, it is possible, e.g. in the context of Fib. 1c, to collect excess carbonating fluid (i.e. carbonating gas) from the primary last reactor 230 and use the gas as the first carbonating fluid CF1 in the primary first reactor 210. However, as detailed in Figs. 4 and 5, the same fluid, e.g. flue gas, can be used as the carbonating fluid in all subsequent carbonating phases. Thus, an embodiment comprises conveying gas from the second phase to the first phase to be used as at least a part of the primary carbonating fluid CF1. In a similar manner, an embodiment comprises conveying gas from the third phase to the second phase to be used as at least a part of the secondary carbonating fluid CF2. Any one of, any two of, or all of the carbonating fluids CF, CF1, CF2, CF3 may comprise flue gas.

As indicated above, in the present invention, first water W1 is mixed with the solid composition SC. Thus, the carbonation is referred to as wet or semi-dry carbonation. In wet carbonation some of the salts of the solid composition leach to the first water. Therefore, it is also possible to utilize wet carbonation for leaching harmful components from the carbonatable material. To this end, the carbonated mixture CM is dewatered by removing some of the water from the carbonated mixture CM. As such material is further stabilized, water of higher purity may be added to the thus obtained drier material, whereby the content of harmful components decreases. As for differences of wet and semi-dry carbonation, reference is made to a dry-matter content of the carbonatable mixture M2C, as discussed below.

Thus, referring to Figs. 2a, 2b, and 5 an embodiment of the invention comprises separating a first water fraction WF1 and a first solid fraction SF1 from the carbonated mixture CM. However, according to the first aspect of the invention, second water W2 is added to the first solid fraction SF1 to form a sludge comprising at least a part of the carbonated mixture CM. The first water fraction WF1 and the first solid fraction SF1 is produced using a primary dewatering apparatus 310. The primary dewatering apparatus 310 may comprise e.g. a filter press, a belt press, a screw press, or a centrifuge for the purpose. The first solid fraction SF1 comprises a lot of the solids (typically most of the solids) of the carbonated mixture CM. Thus, a dry matter content of the first solid fraction SF1 is higher than a dry matter content of the first water fraction WF1.

As indicated above, already the carbonation stabilizes some of the compounds of the solid composition. According to the first aspect of the invention, after carbonation, at least a part of the carbonated mixture CM is further stabilized using a stabilizer S. Therein, at least a part of the carbonated mixture CM is stabilized by adding a stabilizer S comprising iron (Fe) to a sludge comprising at least a part of the carbonated mixture CM. In this way, a mixture MA comprising the carbonous material is produced. The sludge comprising at least a part of the carbonated mixture CM is the first solid fraction SF1 of the carbonated mixture CM with the additional second water W2 (as in e.g. Fig. 2a).

As for the stabilizer S, the stabilizer S comprises iron (Fe), i.e. the stabilizer comprises elemental iron (Fe) or iron (Fe) comprised by a compound. The elemental iron (Fe) always has an oxidation number zero. Elemental iron has been found to stabilize many compounds effectively. As for the compound comprising iron, it has been found that such compounds, wherein the iron has an oxidation number +2 or +3 function reasonably well as the stabilizer. Moreover, it has been found that such compounds, wherein the iron has an oxidation number +2 function even more effectively as the stabilizer. This may be due to a reducing effect of the stabilizer S in the non-alkaline environment.

Therefore, in an embodiment, the stabilizer S comprises iron (Fe) having the oxidation number zero, +2, or +3. More preferably, the stabilizer S comprises iron (Fe) having the oxidation number zero or +2. As well known the oxidation number refers to total number of electrons that an atom either gains or loses in order to form a chemical bond with another atom or molecule.

Specific examples of material suitable for use as the stabilizer S include elemental iron (Fe) and iron sulphate (FeSO₄). It is noted that in the iron sulphate, the oxidation number of the iron is +2. In an embodiment, the stabilizer S comprises elemental iron (Fe) or iron sulphate (FeSO₄) or both.

Dewatering before the further stabilization is beneficial from the point of view of washing the solid compound SC and use of water. In particular, the water can be recycled. Thus, a preferable embodiment comprises using at least a part of the first water fraction WF1 as at least a part of the first water W1. Referring to Fig. 5, a first water purifier 320 can be used to purify the water of the first water fraction WF1 before it is used as part of the first water W1. Make-up water may be used, if needed. As the make-up water, water from a secondary dewatering apparatus 410, i.e. a part of a second water fraction W2, may be used, as indicated by a dotted line in Fig. 5. In the alternative, e.g. natural water or tap water can be used as the make-up water for the first water W1. If water supply is sufficiently large, circulating a part of the first water fraction WF1 to be used as a part of the first water W1 may not be necessary. In such a case, a first water purifier is not needed. Moreover, if the purity of the water of the water supply is sufficiently high, recycling a part of the first water fraction to be used as a part of the first water may be done without purifying the first water fraction. The need for the first purifier 320 may depend on the ratio of recycled water to make-up water and a purity of the make-up water.

Another purpose of the dewatering is to remove chloride (Cl⁻) or chloride compounds from the carbonated mixture CM before stabilization with the stabilizer S. Excessive chloride may be harmful in the materials as such, whereby removal of chloride by using the primary dewatering apparatus 310 is preferable. Moreover, excessive amount of chloride (Cl⁻) may affect the stabilization, if chloride is not leached before stabilization e.g. with the first water fraction WF1. Therefore, in an embodiment, a content of chloride (Cl⁻) in the carbonated mixture CM before the separation of the first water fraction WF1 and the first solid fraction SF1 therefrom is higher than a content of chloride (Cl⁻) in the sludge comprising at least a part of the carbonated mixture CM. This is achieved at least when a content of chloride (Cl⁻) in the second water W2 is less than that of the carbonated mixture CM. Thus, in an embodiment, a content of chloride of the second water W2 is less than that of the carbonated mixture CM.

The sludge that is stabilized with the stabilizer S is, in an embodiment (e.g. the embodiment of Fig. 1) the carbonated mixture CM. However, referring to Fig. 2a, the sludge that is stabilized, i.e. the sludge comprising at least a part of the carbonated mixture CM is formed by first dewatering the carbonated mixture CM to form a first water fraction WF1 and a first solid fraction SF1. Thereafter, the sludge comprising at least a part of the carbonated mixture CM is formed by mixing second water W2 to the first solid fraction SF1

Typically, the carbonous material for use should be reasonable dry. Therefore, preferably also the mixture MA comprising the carbonous material is dewatered, as shown in Figs. 2b, 2c, and 5. Thus, an embodiment comprises separating a second water fraction WF2 and a second solid fraction SF2 from the mixture MA comprising the carbonous material. The second solid fraction SF2 comprises the carbonous material. Moreover, a dry matter content of the second solid fraction SF2 is higher than a dry matter content of the second water fraction WF2.

In such an embodiment, the second water fraction WF2 can be utilized in the process. For example, an embodiment comprises using at least a part of the second water fraction WF2 as at least a part of the first water W1 and/or as at least a part of the second water W2 (see Figs. 2b and 5).

Typically, a purity of first water W1 needs not be as high as a purity of the second water W2. Thus the second water fraction WF2 is usable as at least a part of the first water W1 and/or as at least a part of the second water W2. However, because of the purity, preferably, the method comprises using at least a part of the second water fraction WF2 as at least a part of the second water W2. Naturally, in addition, another part of the second water fraction WF2 may be used as a part of the first water W1, e.g. as make-up water for the carbonation. Before use (in the first water W1 and/or in the second water W2), the second water fraction SF2 may be purified using a second purifier 420 (see Fig. 5). If water supply is sufficiently large, circulating a part of the second water fraction WF2 to be used as a part of the first and/or second water W1, W2 may not be necessary. In such a case, the second water purifier is not needed. Moreover, if the purity of the water of the water supply is sufficiently high, recycling a part of the second water fraction to be used as a part of the first and/or second water may be done without purifying the second water fraction. The need for the second purifier 420 may depend on the ratio of recycled water to make-up water and a purity of the make-up water.

Preferably, the method comprises both
- separating the first water fraction WF1 and a first solid fraction SF1 from the carbonated mixture CM and
- separating the second water fraction WF2 and a second solid fraction SF2 from the mixture MA comprising the carbonous material.

In a preferable embodiment, a content of chloride (Cl⁻) of second water fraction WF2 is less than a content of chloride (Cl⁻) of the first water fraction WF1. The water fraction(s) WF1, WF2 may be utilized as discussed above.

Fig. 1a also shows a system 900 for manufacturing carbonous material. The system comprises a primary reactor arrangement 100. The primary reactor arrangement 100 comprises a primary first inlet 111 for letting in a solid composition SC, a primary second inlet 121 for letting in first water W1, a primary third inlet 131 for letting in liquid or gaseous carbonating fluid CF comprising at least 1 vol % carbon dioxide CO₂, and a primary first outlet 112 for letting out carbonated mixture CM. The primary reactor arrangement 100 is configured to form the carbonated mixture CM by carbonating a mixture (i.e. the mixture M2C) comprising the solid composition SC and the first water W1 with the carbonating fluid CF.

As for the components of the primary reactor arrangement 100, the primary reactor arrangement 100 comprises at least one reactor 210, 220, 230 (see Figs. 1b, 1c, Fig. 1d, 4, and 5) for carbonating the carbonatable mixture C2M in one or more phases. Each reactor may correspond to one of the phases disclosed in the context of the method. The primary reactor arrangement may comprise the pre-treatment unit 202 (see Figs. 1b, 4, and 5). The primary reactor arrangement 100 need not comprise a separate pre-treatment unit 202. The primary reactor arrangement 100 suffices for the carbonation.

Referring to Fig. 1a, according to the first aspect, the system 900 comprises a secondary reactor arrangement 500. The secondary reactor arrangement 500 comprises a secondary first inlet arrangement 511 for letting in a sludge comprising at least a part of the carbonated mixture CM receivable from the primary first outlet 112, a secondary second inlet 521 for letting in stabilizer S comprising iron (Fe), and a secondary outlet 512 for letting out a mixture MA comprising the carbonous material. The secondary reactor arrangement 500 is configured to stabilize the sludge comprising at least a part of the carbonated mixture CM by the stabilizer S.

As for the secondary first inlet arrangement 511, the secondary first inlet arrangement 511 may comprise one inlet for letting in the carbonated mixture CM, as in Figs. 1a to 1c. In the alternative, the secondary first inlet arrangement 511 may comprise two inlets, one for letting in the first solid fraction SF1 (i.e. the dewatered part of the carbonated mixture CM) and another for letting in the second water W2, as in Figs. 2a and 2b.

Concerning the water circulation of the process and referring to Figs. 2a, 2b, and 5, an inventive embodiment of the system 900 comprises a primary dewatering apparatus 310 for separating a first water fraction WF1 and a first solid fraction SF1 from the carbonated mixture CM. According to the first aspect of the invention, this embodiment also comprises a conveyor configured to convey the first solid fraction SF1 to the secondary reactor arrangement 500, as indicated in Figs. 2a, 2b, and 5. Typically, the first solid fraction SF1 is reasonably dry. Possible conveyors include screw conveyors, belt conveyors and vehicles. Moreover, pipelines can be used as the conveyor. Preferably the embodiment comprises a pipeline configured to convey at least a part of the first water fraction WF1 from the primary dewatering apparatus 310 to the primary second inlet 121. Thus, at least a part of the first water fraction WF1 can be used as at least a part of the first water W1.

Referring to Figs. 2b, 2c, and 5, an preferred embodiment of the system 900 comprises a secondary dewatering apparatus 410 for separating a second water fraction WF2 and a second solid fraction SF2 from the mixture MA comprising the carbonous material. Preferably the system further comprises [A] pipeline configured to convey at least a part of the second water fraction WF2 from the secondary dewatering apparatus 410 to the primary second inlet 121 and/or [B] a pipeline configured to convey at least a part of the second water fraction WF2 from the secondary dewatering apparatus 410 to the secondary first inlet arrangement 511. Thus, at least a part of the second water fraction WF2 can be used [A] as at least a part of the first water W1 and/or [B] as at least a part of the second water W2; as detailed above.

Concerning the multi-phase carbonation of the solid composition SC, and referring to Figs. 1b and 1c, in an embodiment of the system 900, the primary reactor arrangement 100 comprises a primary first reactor 210. The primary first reactor 210 comprises the primary third inlet 131 and a primary second outlet 122 for letting out partly carbonated mixture PCM. The primary reactor arrangement 100 further comprises a primary last reactor 230 comprising, a primary fourth inlet 141 for letting in partly carbonated mixture (PCM, FCM), a primary fifth inlet 151 for letting in liquid or gaseous carbonating fluid (CF2, CF3), and the primary first outlet 112. In case of a two-phase carbonation, the primary first 210 and primary last 230 reactors suffice.

However, in case of three-phase carbonation, a further reactor is needed, as indicated in Fig. 1d. Thus, in an embodiment, the primary reactor arrangement 100 comprises a primary second reactor 220. The a primary second reactor 220 comprises a primary sixth inlet 161 for letting in partly carbonated mixture PCM, a primary seventh inlet 171 for letting in liquid or gaseous carbonating fluid CF2, and a primary third outlet 132 for letting out further carbonated mixture FCM.

As for the content of the carbonating fluid, preferably, a gas comprising at least 1 vol% carbon dioxide, more preferably at least 5 vol% carbon dioxide, is used.

This concerns all the carbonating fluids CF, CF1, CF2, CF3, which may be different or similar fluids in composition. Thus, an embodiment comprises carbonating the carbonatable mixture M2C with a gas comprising carbon dioxide CO₂. A preferable example of such a gas is flue gas. Referring to Figs. 3, 4 and 5, flue gas FG can be formed by burning some fuel F. Thus, an embodiment comprises burning fuel F to produce flue gas FG and using at least some of the flue gas FG as the carbonating fluid CF or as a part of the carbonating fluid CF. Thus, in addition to flue gas, some other gas comprising CO₂ can be used as the carbonating fluid CF. A corresponding system comprises a furnace for burning fuel F and a channel for conveying at least some flue gas FG from the furnace to the first reactor arrangement 100 to be used as a carbonating fluid CF, CF1, CF2, CF3.

When carbonating is performed in two or more phases, as in Fig. 1b, 1c, 4, and 5, the flue gas FG can be used as carbonating fluid (CF1, CF2, CF3) in all phases. Preferably, the flue gas FG is cleaned before using it as the carbonating fluid. Figs. 4 and 5 show a flue gas cleaner 090 for the purpose. Preferably, the flue gas cleaner 090 comprises at least one of a filter, a cyclone, and an electrostatic precipitator. In addition, the flue gas cleaner may comprise a scrubber. Thus, an embodiment comprises burning fuel F to produce flue gas FG, cleaning the flue gas FG, and using at least some of the cleaned flue gas CFG as the carbonating fluid CF or as a part of the carbonating fluid CF. A corresponding system comprises a furnace for burning fuel F, the flue gas cleaner 090, a channel for conveying at least some flue gas FG from the furnace to the flue gas cleaner 090, and a channel for conveying at least some cleaned flue gas CFG from the flue gas cleaner 090 to the first reactor arrangement 100 to be used as a carbonating fluid CF, CF1, CF2, CF3. It has been found that the carbonation is efficient, when the solid composition comprises sufficiently potassium, sodium, calcium, and/or magnesium. Thus, preferably, the solid composition SC comprises at least 10 w% potassium, at least 10 w% sodium, at least 10 w% calcium, at least 10 w% magnesium, or at least 10 w% potassium, sodium, calcium, and magnesium in total. Herein the content refers to content of any one of these elements or all of these elements as contained in the compound(s) of the solid composition SC. The percentage is given on dry basis. However, the solid composition is typically relatively dry before adding the first water W1.

Moreover, it has been found that when the solid composition comprises sufficiently calcium and/or magnesium, the carbonates of these materials are capable of stabilizing many heavy metals already during the carbonation. Thus, preferably, the solid composition SC comprises at least 10 w% calcium, at least 10 w% magnesium, or at least 10 w% calcium, and magnesium in total. This relates mainly to the stabilization during carbonation.

It has been found that already the carbonation stabilizes particularly well copper (Cu), lead (Pb), and zinc (Zn). Thus, in an embodiment the solid composition SC comprises at least one of copper (Cu), lead (Pb), zinc (Zn), and a compound comprising one of these (Cu, Pb, Zn).

Moreover, it has been found that the stabilizer S stabilizes particularly well both chromium (Cr) and antimony (Sb). One problem with antimony is that carbonation often increases its leachability, even if the wet carbonation is beneficial for stabilization of several other elements. As for the numbers in Table 1 it is noted that the leachability of antimony also decreases by stabilization with the stabilizer S, compared to its leachability after carbonation.

Thus, in an embodiment the solid composition SC comprises at least one of copper (Cu), lead (Pb), zinc (Zn), a compound comprising copper, a compound comprising lead, a compound comprising zinc, chromium (Cr), a compound comprising chromium, antimony (Sb), and a compound comprising antimony. In particular, it has been found that the stabilizer S is capable of reducing hexavalent chromium (Cr-VI) to trivalent chromium (Cr-III). Thus, a preferable embodiment comprises stabilizing the carbonated mixture CM by reducing hexavalent chromium (Cr-VI) of the carbonated mixture CM to trivalent chromium (Cr-III). This stabilization is a result of reactions induced by the stabilizer S.

In an embodiment, the solid composition SC comprises ash. Referring to Figs. 3 to 5, preferably the method comprises burning fuel F to produce flue gas FG and ash ASH or air pollution control residue APCR, of which at least one is comprised by the solid composition SC and using at least some of the flue gas

FG as the carbonating fluid CF or as a part of the carbonating fluid CF. Typically more ash is formed by combustion of liquid or solid fuel than gaseous fuels. Thus, more preferably the method comprises burning liquid or solid fuel F to produce flue gas FG and the ash ASH or air pollution control residue APCR, of which at least one is comprised by the solid composition SC and using at least some of the flue gas FG as the carbonating fluid CF or as a part of the carbonating fluid CF.

Preferably, the solid composition SC comprises fly ash ASH or air pollution control residue APCR, as shown in Fig. 5. Fly ash is ash that flies from the furnace wherein the fuel is burnt with flue gas. Fly ash is therefore collectable from a flue gas cleaner, e.g. the flue gas cleaner 090 of Fig. 4 or 5. If an air pollution control substance is used, a residue thereof, i.e. air pollution control residue APCR, may be collected in a similar manner as fly ash. Thus, referring to Fig. 5, preferably the method comprises burning liquid or solid fuel F to produce flue gas FG comprising fly ash and/or air pollution control residue, separating the fly ash ASH and/or the air pollution control residue APCR from the flue gas to produce cleaned flue gas CFG, and using at least some of the cleaned flue gas CFG as the carbonating fluid CF, wherein the solid composition SC comprises the fly ash ASH and/or the air pollution control residue APCR separated from the flue gas FG. The fly ash ASH is separated from the flue gas FG by a flue gas cleaner 090. The air pollution control residue is separated from the flue gas FG by the flue gas cleaner 090 or another flue gas cleaner. Naturally, the solid composition SC may comprise also other types of ash, if applicable. Moreover, even if fly ash ASH and/or air pollution control residue APCR is separated from the flue gas FG and the cleaned flue gas CFG is used for carbonation, neither the fly ash ASH nor the air pollution control residue APCR needs to be carbonated, i.e. the solid composition SC needs not comprise the fly ash ASH or the air pollution control residue APCR. However, the method has been found to be an attractive way to handle fly ash and/or air pollution control residue.

As indicated above, the carbonation may be a wet carbonation or a semi-dry carbonation. As for the wet carbonation, a dry matter content of the carbonatable mixture M2C is from 20 w% to 40 w% in wet carbonation. This is achieved by adding the first water W1 accordingly. Thus, an embodiment comprises mixing the solid composition SC with the first water W1 to form the carbonatable mixture M2C such that the carbonatable mixture M2C has a dry matter content of 20 w% to 40 w%. As for the semi-dry carbonation, the dry matter content may be higher, but then the benefits of wet carbonation are not necessarily achieved.

It has been found that a temperature of the carbonation should not be too high because the carbon dioxide should dissolve into the carbonatable mixture M2C during carbonation. Thus, an embodiment comprises adding the carbonating fluid CF to the carbonatable mixture M2C having a temperature from +1 °C to +60 °C. Preferably, a temperature of the carbonatable mixture M2C, when the carbonating fluid CF is added, is from +10 °C to +55 °C. When carbonated, the carbonatable mixture M2C is preferably arranged in a pressure of 0.8 bar to 1.5 bar (absolute pressure), more preferably in atmospheric pressure. In case of multi-phase carbonation, this preferably applies to all phase to which carbonation fluid (CF, CF1, CF2, CF3) is fed.

The stabilizer S comprises iron, as detailed above. It has been found that elemental iron stabilizes reasonably well both chromium and antimony. However, it has been found that also iron of a compound, wherein an oxidation number of the iron is +2, such as iron sulphate, stabilizes chromium. Thus, in an embodiment, the solid composition SC comprises at least one of chromium and antimony and the stabilizer S comprises iron having the oxidation number zero or +2, such as elemental iron or iron sulphate. In an embodiment, the solid composition SC comprises at least one of chromium and antimony and the stabilizer S comprises iron having the oxidation number zero. The elemental iron may be used in the form of iron powder. The iron powder may function the better the smaller particles the iron powder has. A particle size of the iron powder may be e.g. at least 100 mesh, or in other words, at most 150 µm.

As for a content of the stabilizer, an embodiment comprises adding the stabilizer S to the carbonated mixture CM such that a total weight of the iron (Fe) or the compound comprising iron, e.g. iron sulphate (FeSO₄), is 2 % to 8 % of the weight of the sludge comprising at least a part of the carbonated mixture CM. What has been said above about the composition of the sludge comprising at least a part of the carbonated mixture CM applies. This amount has been found to be effective at least in experiments, wherein the sludge has a suitable dry matter content. Preferably, a dry matter content of the sludge comprising at least a part of the carbonated mixture CM is from 15 w% to 35 w%.

As shown in the section "Experimental", the method makes it possible to treat material that is considered as hazardous waste to material that is considered as non-hazardous waste via reclassification of the material from hazardous waste to non-hazardous waste. Moreover, it seems possible to treat some non-hazardous waste to meet the waste acceptance criteria of inert waste or non-hazardous waste landfills or hazardous waste to meet the waste acceptance criteria for hazardous waste landfills.

Moreover, the produced carbonous material can be utilized in various applications, including manufacturing concrete, material for pavement, and fillers for elastomers. In this way, use of virgin materials may be reduced. Furthermore, atmospheric carbon dioxide can be bound to the carbonous material.

### Experimental

Experiments were conducted to study leachability of a solid composition SC before and after treatment by the method as discussed above. In the tests, the solid composition SC consisted of fly ash of recycled wood combustion, as obtained from a filter-type flue gas cleaner. Leachability of the following compositions were measured: the untreated fly ash; the fly ash as treated by the method including carbonation and stabilization with the stabilizer S, wherein the stabilizer S consisted of iron powder; and the fly ash as treated by the method including carbonation and stabilization with the stabilizer S, wherein the stabilizer S consisted of iron sulphate. An amount of the stabilizer was 7 w% of the stabilizable material, i.e. the sludge comprising at least a part of the carbonated mixture CM. The leachability was measured as indicated in the standard EN 12457-3:2002 E. The leachability herein refers to the cumulative leachability A₂₋₁₀ as defined in the standard (see paragraph 6.3). Leachability of different elements are shown in Table 1 in units of mg/kg. The concentrations C₈ and C₂ defined in the standard, sections 6.2 and 6.3, of the elements of Table 1 were measured by mass spectrometry (ICP-MS) or optical emission spectrometry (ICP-OES).

**Table 1: Leachability of elements of untreated ash, ash treated with iron powder, and ash treated with iron sulphate.**

| | | Leachability | Leachability | Leachability |
|---|---|---|---|---|
| Element | | before | after | after |
| | | | Fe powder | FeSO₄ |
| | | | | |
| Arsenic | As | 0.06 | <0.06 | 0.1 |
| Barium | Ba | 14 | 0.42 | 0.49 |
| Cadmium | Cd | 0.011 | <0.01 | <0.01 |
| Chromium | Cr | 11 | <0.06 | 0.06 |
| Copper | Cu | 3.51 | <0.05 | <0.05 |
| Mercury | Hg | 0.005 | <0.005 | <0.005 |
| Molybdenum | Mo | 1.1 | 0.7 | 0.52 |
| Nickel | Ni | 0.001 | <0.05 | <0.05 |
| Lead | Pb | 753 | <0.05 | 0.05 |
| Antimony | Sb | 0.01 | 0.4 | 1.41 |
| Selenium | Se | 0.08 | 0.09 | 0.07 |
| Zinc | Zn | 39 | <0.15 | 0.22 |
| Chloride | Cl⁻ | 52161 | 648 | 637 |
| Fluoride | F | 52 | <10 | <10 |
| Sulphate | SO₄²⁻ | 11996 | 16814 | 14939 |
| Dissolved organic carbon | DOC | 32 | <100 | <98 |
| Total inorganic carbon | TIC | 0.7 | 3.7 | 3.7 |

As shown in Table 1, the leachability of most of the elements is decreased by the method. This simplifies disposal of the ash and/or enables its utilization as raw material. As an example, the leachability of lead, before treatment, is 753 mg/kg, which exceeds the EU-limit for hazardous waste landfilling. However, after the treatment, the leachability of lead is negligible, being below a EU-limit for inert waste landfilling. The same applies for chloride. As another example, the leachability of chromium, before treatment, is 11 mg/kg, which exceeds the EU-limit for non-hazardous waste landfilling. However, after the treatment, the leachability of chromium is negligible, being below a EU-limit for inert waste. These values indicate that use of the treated ash (i.e. the carbonous material) may be much less regulated than use of the untreated ash, e.g. if used for landfilling. Further benefits of the method include binding carbon dioxide.

It is noted that the successfulness of the carbonation can be observed from the amount of total inorganic carbon in the solids.

## Claims

1. A Method for manufacturing carbonous material, the method comprising
- mixing a solid composition (SC) with first water (W1) to form a carbonatable mixture (M2C), the solid composition (SC) comprising a compound comprising an element selected from the Group I or II of the periodic table of elements excluding hydrogen,
- adding liquid or gaseous carbonating fluid (CF) to the carbonatable mixture (M2C) to carbonate the carbonatable mixture (M2C) in a primary reactor arrangement to form carbonated mixture (CM), the carbonating fluid (CF) comprising at least 1 vol % carbon dioxide (CO₂), such that a pH of the carbonated mixture (CM) is less than 9,
- separating a first water fraction (WF1) and a first solid fraction (SF1) from the carbonated mixture (CM) by using a primary dewatering apparatus,
- adding a second water (W2) to the first solid fraction (SF1) to form sludge comprising at least a part of the carbonated mixture (CM),
and thereafter
- adding a stabilizer (S) comprising iron (Fe) to the sludge comprising at least a part of the carbonated mixture (CM) to stabilize the carbonated mixture (CM) in a secondary reactor arrangement to produce a mixture (MA) comprising the carbonous material.

2. The method of claim 1, wherein
- the stabilizer comprises iron (Fe) having the oxidation number zero, +2, or +3;
preferably,
- the stabilizer comprises iron (Fe) having the oxidation number zero or +2; more preferably,
- the stabilizer comprises elemental iron (Fe) or iron sulphate (FeSO₄).

3. The method of claim 1 or 2, comprising
- carbonating the carbonatable mixture (M2C) with a gas comprising carbon dioxide (CO₂);
preferably, the method comprises
- burning fuel (F) to produce flue gas (FG) and
- using at least a part of the flue gas (FG) as the carbonating fluid (CF) or as a part of the carbonating fluid (CF),
more preferably, the method comprises
- burning fuel (F) to produce flue gas (FG),
- cleaning the flue gas (FG) to produce cleaned flue gas (CFG), and
- using at least some of the cleaned flue gas (CFG) as the carbonating fluid (CF) or as a part of the carbonating fluid (CF).

4. The method of any of the claims 1 to 3, wherein the solid composition (SC) comprises
- at least 10 w% potassium, sodium, calcium, and magnesium in total; preferably, the solid composition (SC) comprises
- at least 10 w% calcium and magnesium in total;
more preferably, the solid composition (SC) comprises
- at least 10 w% calcium, or
- at least 10 w% magnesium.

5. The method of any of the claims 1 to 4, wherein the solid composition (SC) comprises
- copper (Cu), lead (Pb), zinc (Zn), chromium (Cr), or antimony (Sb), or a compound comprising any one of these (Cu, Pb, Zn, Cr, Sb);
preferably,
- the solid composition (SC) comprises
- chromium (Cr), antimony (Sb), or a compound comprising any one of these (Cr, Sb);
more preferably the method comprises,
- stabilizing the carbonated mixture (CM) by reducing hexavalent chromium (Cr-VI) of the carbonated mixture (CM) to trivalent chromium (Cr-III).

6. The method of any of the claims 1 to 5, wherein
- the solid composition (SC) comprises ash (ASH) and/or air pollution control residue (APCR);
preferably the method comprises
- burning fuel (F) to produce flue gas (FG) and at least one of ash (ASH) and air pollution control residue (APCR), at least one of which (ASH, APCR) is comprised by the solid composition (SC) and
- using at least a part of the flue gas (FG) as the carbonating fluid (CF) or as a part of the carbonating fluid (CF).

7. The method of any of the claims 1 to 6, comprising
- mixing the solid composition (SC) with the first water (W1) to form the carbonatable mixture (M2C) having a dry matter content of 20 w% to 40 w%.

8. The method of any of the claims 1 to 7, comprising
- adding the carbonating fluid (CF) to the carbonatable mixture (M2C) having a temperature from +1 °C to +60 °C.

9. The method of any of the claims 1 to 8, comprising
- adding the stabilizer (S) to the carbonated mixture (CM) such that a total weight of the iron (Fe) and/or the compound comprising the iron (Fe) is 2 % to 8 % of the weight of the sludge comprising at least a part of the carbonated mixture (CM);
preferably,
- a dry matter content of the sludge comprising at least a part of the carbonated mixture (CM) is 15 w% to 35 w%.

10. The method of any of the claims 1 to 9, wherein
- the carbonatable mixture (M2C) has a dry matter content of 20 w% to 40 w%; preferably the method comprises
- using at least a part of the first water fraction (WF1) as at least a part of the first water (W1).

11. The method of claim 10, wherein
- a content of chloride (Cl⁻) in the carbonated mixture before the separation of the first water fraction (WF1) and the first solid fraction (SF1) therefrom is higher than a content of chloride (Cl⁻) in the sludge comprising at least a part of the carbonated mixture (CM).

12. The method of any of the claims 1 to 11, comprising
- separating a second water fraction (WF2) and a second solid fraction (SF2) from the mixture (MA) comprising the carbonous material, wherein
- the second solid fraction (SF2) comprises at least some of the carbonous material;
preferably the method comprises
- using at least a part of the second water fraction (WF2) as at least a part of the first water (W1) or as at least a part of the second water (W2).

13. The method of any of the claims 1 to 12, comprising
- in a first phase, adding primary carbonating fluid (CF1) to the carbonatable mixture (M2C) to carbonate the carbonatable mixture to form partly carbonated mixture (PCM), the primary carbonating fluid comprising at least 1 vol % carbon dioxide (CO₂),
- transferring the partly carbonated mixture (PCM) to a second phase,
- in the second phase, adding secondary carbonating fluid (CF2) to the partly carbonated mixture (PCM) to carbonate the partly carbonated mixture to form the carbonated mixture (CM) or a further carbonated mixture (FCM), the secondary carbonating fluid (CF2) comprising at least 1 vol % carbon dioxide (CO₂);
preferably the method comprises,
- transferring the further carbonated mixture (FCM) to a third phase, and
- in the third phase, adding tertiary carbonating fluid (CF3) to the further carbonated mixture (FCM) to carbonate the further carbonated mixture (FCM) to form the carbonated mixture (CM), the tertiary carbonating fluid (CF3) comprising at least 1 vol % carbon dioxide (CO₂) AND/OR
- conveying gas from the second phase to the first phase to be used as at least a part of the primary carbonating fluid (CF1);
more preferably,
- at least one of the primary carbonating fluid, the secondary carbonating fluid, and the tertiary carbonating fluid comprises flue gas;
more preferably,
- at least the primary carbonating fluid and the secondary carbonating fluid comprise flue gas.

14. The method of any of the claims 1 to 13, comprising
- adding the carbonating fluid (CF) to the carbonatable mixture (M2C) such that a pH of the carbonated mixture (CM) is at most 8;
preferably,
- a pH of the carbonated mixture (CM) is 6.0 to 8.0 and/or
- a pH of the carbonatable mixture (M2C) is more than 9, more preferably more than 10.

15. A system (900) for manufacturing carbonous material, the system comprising
- a primary reactor arrangement (100) comprising
• a primary first inlet (111) for letting in a solid composition (SC),
• a primary second inlet (121) for letting in first water (W1),
• a primary third inlet (131) for letting in liquid or gaseous carbonating fluid (CF, CF1) comprising at least 1 vol % carbon dioxide (CO₂), and
• a primary first outlet (112) for letting out carbonated mixture (CM),
• the primary reactor arrangement (100) being configured to form the carbonated mixture (CM) by carbonating a mixture comprising the solid composition (SC) and the first water (W1) with the carbonating fluid (CF, CF1),
- a secondary reactor arrangement (500) comprising
• a secondary first inlet arrangement (511) for letting in a sludge comprising at least a part of the carbonated mixture (CM) receivable from the primary first outlet (112),
• a secondary second inlet (521) for letting in stabilizer (S) comprising iron (Fe), and
• a secondary outlet (512) for letting out a mixture (MA) comprising the carbonous material,
• the secondary reactor arrangement (500) being configured to stabilize the sludge comprising at least a part of the carbonated mixture (CM) by the stabilizer (S),
- a primary dewatering apparatus (310) for separating a first water fraction (WF1) and a first solid fraction (SF1) from the carbonated mixture (CM), and
- a conveyor configured to convey the first solid fraction (SF1) to the secondary reactor arrangement (500).

16. The system of claim 15, comprising
- a pipeline configured to convey at least a part of the first water fraction (WF1) from the primary dewatering apparatus (310) to the primary second inlet (121).

17. The system of claim 15 or 16, comprising
- a secondary dewatering apparatus (410) for separating a second water fraction (WF2) and a second solid fraction (SF2) from the mixture (MA) comprising the carbonous material;
preferably the system comprises
- a pipeline configured to convey at least a part of the second water fraction (WF2) from the secondary dewatering apparatus (410) to the primary second inlet (121) and/or
- a pipeline configured to convey at least a part of the second water fraction (WF2) from the secondary dewatering apparatus (410) to the secondary first inlet arrangement (511).

18. The system of any of the claims 15 to 17, the primary reactor arrangement (100) comprises
- a primary first reactor (210) comprising,
• the primary third inlet (131) and
• a primary second outlet (122) for letting out partly carbonated mixture (PCM) and
- a primary last reactor (230) comprising,
• a primary fourth inlet (141) for letting in partly carbonated mixture (PCM, FCM),
• a primary fifth inlet (151) for letting in liquid or gaseous carbonating fluid (CF2, CF3), and
• the primary first outlet (112);
preferably, the system comprises
- a primary second reactor (220) comprising,
• a primary sixth inlet (161) for letting in partly carbonated mixture (PCM),
• a primary seventh inlet (171) for letting in liquid or gaseous carbonating fluid (CF2), and
• a primary third outlet (132) for letting out further carbonated mixture (FCM).

19. The system of any of the claims 15 to 18, wherein
- the secondary first inlet arrangement (511) comprises an inlet for letting in the first solid fraction (SF1) and another inlet for letting in second water (W2).

## Patentansprüche

1. Verfahren zur Herstellung von kohlenstoffhaltigem Material, wobei das Verfahren Folgendes umfasst
- Mischen einer Feststoffzusammensetzung (SC) mit erstem Wasser (W1), um ein karbonisierbares Gemisch (M2C) zu bilden, wobei die Feststoffzusammensetzung (SC) eine Verbindung umfasst, die ein Element ausgewählt aus der Gruppe I oder II des Periodensystems der Elemente mit Ausnahme von Wasserstoff umfasst,
- Zugeben von flüssigem oder gasförmigem karbonisierendem Fluid (CF) zu dem karbonisierbaren Gemisch (M2C), um das karbonisierbare Gemisch (M2C) in einer primären Reaktoranordnung zu karbonisieren, um ein karbonisiertes Gemisch (CM) zu bilden, wobei das karbonisierende Fluid (CF) zumindest 1 Vol.-% Kohlenstoffdioxid (CO₂) umfasst, sodass ein pH-Wert des karbonisierten Gemisches (CM) weniger als 9 beträgt,
- Abtrennen einer ersten Wasserfraktion (WF1) und einer ersten Feststofffraktion (SF1) aus dem karbonisierten Gemisch (CM) unter Verwendung einer primären Entwässerungsvorrichtung,
- Zugeben eines zweiten Wassers (W2) zu der ersten Feststofffraktion (SF1), um einen Schlamm zu bilden, der zumindest einen Teil des karbonisierten Gemisches (CM) umfasst,
und danach:
- Zugeben eines Stabilisators (S), der Eisen (Fe) umfasst, zu dem Schlamm, der zumindest einen Teil des karbonisierten Gemisches (CM) umfasst, um das karbonisierte Gemisch (CM) in einer sekundären Reaktoranordnung zu stabilisieren, um ein Gemisch (MA) herzustellen, das das kohlenstoffhaltige Material umfasst.

2. Verfahren nach Anspruch 1, wobei
- der Stabilisator Eisen (Fe) mit der Oxidationszahl Null, +2 oder +3 umfasst;
wobei bevorzugt,
- der Stabilisator Eisen (Fe) mit der Oxidationszahl Null oder +2 umfasst;
wobei besonders bevorzugt,
- der Stabilisator elementares Eisen (Fe) oder Eisensulfat (FeSO₄) umfasst.

3. Verfahren nach Anspruch 1 oder 2, umfassend
- Karbonisieren des karbonisierbaren Gemisches (M2C) mit einem Gas, das Kohlenstoffdioxid (CO₂) umfasst; wobei das Verfahren bevorzugt Folgendes umfasst
- Verbrennen von Brennstoff (F), um Rauchgas (FG) zu erzeugen und
- Verwenden zumindest eines Teils des Rauchgases (FG) als karbonisierendes Fluid (CF) oder als Teil des karbonisierenden Fluids (CF), wobei das Verfahren besonders bevorzugt Folgendes umfasst,
- Verbrennen von Brennstoff (F), um Rauchgas (FG) zu erzeugen,
- Reinigen des Rauchgases (FG), um gereinigtes Rauchgas (CFG) zu erzeugen, und
- Verwenden zumindest eines Teils des gereinigten Rauchgases (CFG) als karbonisierendes Fluid (CF) oder als Teil des karbonisierenden Fluids (CF).

4. Verfahren nach irgendeinem der Ansprüche 1 bis 3, wobei die Feststoffzusammensetzung (SC) Folgendes umfasst
- zumindest 10 Gew.-% Kalium, Natrium, Calcium und Magnesium insgesamt; wobei die Feststoffzusammensetzung (SC) bevorzugt Folgendes umfasst
- zumindest 10 Gew.-% Calcium und Magnesium insgesamt; wobei die Feststoffzusammensetzung (SC) besonders bevorzugt Folgendes umfasst
- zumindest 10 Gew.-% Calcium, oder
- zumindest 10 Gew.-% Magnesium.

5. Verfahren nach irgendeinem der Ansprüche 1 bis 4, wobei die Feststoffzusammensetzung (SC) Folgendes umfasst
- Kupfer (Cu), Blei (Pb), Zink (Zn), Chrom (Cr) oder Antimon (Sb) oder eine Verbindung, die irgendeines davon (Cu, Pb, Zn, Cr, Sb) umfasst;
wobei bevorzugt,
- die Feststoffzusammensetzung (SC) Folgendes umfasst
- Chrom (Cr), Antimon (Sb) oder eine Verbindung, die irgendeines davon (Cr, Sb) umfasst;
wobei das Verfahren besonders bevorzugt Folgendes umfasst,
- Stabilisieren des karbonisierten Gemisches (CM) durch Reduzieren des sechswertigen Chroms (Cr-VI) des karbonisierten Gemisches (CM) zu dreiwertigem Chrom (Cr-III).

6. Verfahren nach irgendeinem der Ansprüche 1 bis 5, wobei
- die Feststoffzusammensetzung (SC) Asche (ASH) und/oder Luftreinhalterückstand (APCR) umfasst;
wobei das Verfahren bevorzugt Folgendes umfasst
- Verbrennen von Brennstoff (F), um Rauchgas (FG) zu erzeugen, und zumindest eines von Asche (ASH) und Luftreinhalterückstand (APCR), von denen zumindest eines (ASH, APCR) in der Feststoffzusammensetzung (SC) enthalten ist, und
- Verwenden zumindest eines Teils des Rauchgases (FG) als karbonisierendes Fluid (CF) oder als Teil des karbonisierenden Fluids (CF).

7. Verfahren nach irgendeinem der Ansprüche 1 bis 6, umfassend
- Mischen der Feststoffzusammensetzung (SC) mit dem ersten Wasser (W1), um das karbonisierbare Gemisch (M2C) mit einem Trockensubstanzgehalt von 20 Gew.-% bis 40 Gew.-% zu bilden.

8. Verfahren nach irgendeinem der Ansprüche 1 bis 7, umfassend
- Zugeben des karbonisierenden Fluids (CF) zu dem karbonisierbaren Gemisch (M2C) mit einer Temperatur von +1 °C bis +60 °C.

9. Verfahren nach irgendeinem der Ansprüche 1 bis 8, umfassend
- Zugeben des Stabilisators (S) zu dem karbonisierbaren Gemisch (CM), sodass ein Gesamtgewicht des Eisens (Fe) und/oder der das Eisen (Fe) umfassenden Verbindung 2 % bis 8 % des Gewichtes des Schlamms beträgt, der zumindest einen Teil des karbonisierten Gemisches (CM) umfasst;
wobei bevorzugt,
- ein Trockensubstanzgehalt des Schlamms, der zumindest einen Teil des karbonisierten Gemisches (CM) umfasst, 15 Gew.-% bis 35 Gew.-% beträgt.

10. Verfahren nach irgendeinem der Ansprüche 1 bis 9, wobei
- das karbonisierbare Gemisch (M2C) einen Trockensubstanzgehalt von 20 Gew.-% bis 40 Gew.-% aufweist;
wobei das Verfahren bevorzugt Folgendes umfasst
- Verwenden zumindest eines Teils der ersten Wasserfraktion (WF1) als zumindest ein Teil des ersten Wassers (W1).

11. Verfahren nach Anspruch 10, wobei
- ein Gehalt an Chlorid (Cl⁻) in dem karbonisierten Gemisch vor der Abtrennung der ersten Wasserfraktion (WF1) und der ersten Feststofffraktion (SF1) daraus höher als ein Gehalt an Chlorid (Cl⁻) in dem Schlamm ist, der zumindest einen Teil des karbonisierten Gemisches (CM) umfasst.

12. Verfahren nach irgendeinem der Ansprüche 1 bis 11, umfassend
- Abtrennen einer zweiten Wasserfraktion (WF2) und einer zweiten Feststofffraktion (SF2) aus dem Gemisch (MA), das das kohlenstoffhaltige Material umfasst, wobei
- die zweite Feststofffraktion (SF2) zumindest einen Teil des kohlenstoffhaltigen Materials umfasst;
wobei das Verfahren bevorzugt Folgendes umfasst
- Verwenden zumindest eines Teils der zweiten Wasserfraktion (WF2) als zumindest ein Teil des ersten Wassers (W1) oder als zumindest ein Teil des zweiten Wassers (W2).

13. Verfahren nach irgendeinem der Ansprüche 1 bis 12, umfassend
- in einer ersten Phase, Zugeben von primärem karbonisierendem Fluid (CF1) zu dem karbonisierbaren Gemisch (M2C), um das karbonisierbare Gemisch zu karbonisieren, um ein teilweise karbonisiertes Gemisch (PCM) zu bilden, wobei das primäre karbonisierende Fluid zumindest 1 Vol.-% Kohlenstoffdioxid (CO₂) umfasst,
- Überführen des teilweise karbonisierten Gemisches (PCM) in eine zweite Phase,
- in der zweiten Phase, Zugeben von sekundärem karbonisierendem Fluid (CF2) zu dem teilweise karbonisierten Gemisch (PCM), um das teilweise karbonisierte Gemisch zu karbonisieren, um das karbonisierte Gemisch (CM) oder ein weiter karbonisiertes Gemisch (FCM) zu bilden, wobei das sekundäre karbonisierende Fluid (CF2) zumindest 1 Vol.-% Kohlenstoffdioxid (CO₂) umfasst;
wobei das Verfahren bevorzugt Folgendes umfasst,
- Überführen des weiter karbonisierten Gemisches (FCM) in eine dritte Phase, und
- in der dritten Phase, Zugeben von tertiärem karbonisierendem Fluid (CF3) zu dem weiter karbonisierten Gemisch (FCM), um das weiter karbonisierte Gemisch (FCM) zu karbonisieren, um das karbonisierte Gemisch (CM) zu bilden, wobei das tertiäre karbonisierende Fluid (CF3) zumindest 1 Vol.-% Kohlenstoffdioxid (CO₂) umfasst, UND/ODER
- Fördern von Gas aus der zweiten Phase in die erste Phase, um als zumindest ein Teil des primären karbonisierenden Fluids (CF1) verwendet zu werden; wobei besonders bevorzugt,
- zumindest eines von dem primären karbonisierenden Fluid, dem sekundären karbonisierenden Fluid und dem tertiären karbonisierenden Fluid Rauchgas umfasst; wobei besonders bevorzugt,
- zumindest das primäre karbonisierende Fluid und das sekundäre karbonisierende Fluid aus Rauchgas bestehen.

14. Verfahren nach irgendeinem der Ansprüche 1 bis 13, umfassend
- Zugeben des karbonisierenden Fluids (CF) zu dem karbonisierbaren Gemisch (M2C), sodass ein pH-Wert des karbonisierten Gemisches (CM) höchstens 8 beträgt;
wobei bevorzugt:
- ein pH-Wert des karbonisierten Gemisches (CM) 6,0 bis 8,0 beträgt und/oder
- ein pH-Wert des karbonisierbaren Gemisches (M2C) mehr als 9, besonders bevorzugt mehr als 10 beträgt.

15. System (900) zur Herstellung von kohlenstoffhaltigem Material, wobei das System Folgendes umfasst
- eine primäre Reaktoranordnung (100), umfassend
• einen primären ersten Einlass (111) zum Einlassen einer Feststoffzusammensetzung (SC),
• einen primären zweiten Einlass (121) zum Einlassen von erstem Wasser (W1),
• einen primären dritten Einlass (131) zum Einlassen von flüssigem oder gasförmigem karbonisierendem Fluid (CF, CF1), das zumindest 1 Vol.-% Kohlenstoffdioxid (CO₂) umfasst, und
• einen primären ersten Auslass (112) zum Ablassen des karbonisierten Gemisches (CM),
• wobei die primäre Reaktoranordnung (100) ausgestaltet ist, um das karbonisierte Gemisch (CM) durch Karbonisieren eines Gemisches zu bilden, das die Feststoffzusammensetzung (SC) und das erste Wasser (W1) mit dem karbonisierenden Fluid (CF, CF1) umfasst,
- eine sekundäre Reaktoranordnung (500), umfassend
• eine sekundäre erste Einlassanordnung (511) zum Einlassen eines Schlamms, der zumindest einen Teil des karbonisierten Gemisches (CM) umfasst, das von dem primären ersten Auslass (112) aufnehmbar ist,
• einen sekundären zweiten Einlass (521) zum Einlassen von Stabilisator (S), der Eisen (Fe) umfasst, und
• einen sekundären Auslass (512) zum Ablassen eines Gemisches (MA), das das kohlenstoffhaltige Material umfasst,
• wobei die sekundäre Reaktoranordnung (500) ausgestaltet ist, um den Schlamm, der zumindest einen Teil des kohlenstoffhaltigen Gemisches (CM) umfasst, durch den Stabilisator (S) zu stabilisieren,
- eine primäre Entwässerungsvorrichtung (310) zum Abtrennen einer ersten Wasserfraktion (WF1) und einer ersten Feststofffraktion (SF1) aus dem karbonisierten Gemisch (CM), und
- einen Förderer, der ausgestaltet ist, um die erste Feststofffraktion (SF1) zu der sekundären Reaktoranordnung (500) zu fördern.

16. System nach Anspruch 15, umfassend
- eine Rohrleitung, die ausgestaltet ist, um zumindest einen Teil der ersten Wasserfraktion (WF1) von der primären Entwässerungsvorrichtung (310) zu dem primären zweiten Einlass (121) zu fördern.

17. System nach Anspruch 15 oder 16, umfassend
- eine sekundäre Entwässerungsvorrichtung (410) zum Abtrennen einer zweiten Wasserfraktion (WF2) und einer zweiten Feststofffraktion (SF2) aus dem Gemisch (MA), das das kohlenstoffhaltige Material umfasst;
wobei das System bevorzugt Folgendes umfasst
- eine Rohrleitung, die ausgestaltet ist, um zumindest einen Teil der zweiten Wasserfraktion (WF2) von der sekundären Entwässerungsvorrichtung (410) zu dem primären zweiten Einlass (121) zu fördern und/oder
- eine Rohrleitung, die ausgestaltet ist, um zumindest einen Teil der zweiten Wasserfraktion (WF2) von der sekundären Entwässerungsvorrichtung (410) zu der sekundären ersten Einlassanordnung (511) zu fördern.

18. System nach irgendeinem der Ansprüche 15 bis 17, wobei die primäre Reaktoranordnung (100) Folgendes umfasst
- einen primären ersten Reaktor (210), umfassend,
• den primären dritten Einlass (131) und
• einen primären zweiten Auslass (122) zum Ablassen eines teilweise karbonisierten Gemisches (PCM) und
- einen primären letzten Reaktor (230), umfassend,
• einen primären vierten Einlass (141) zum Einlassen von teilweise karbonisiertem Gemisch (PCM, FCM),
• einen primären fünften Einlass (151) zum Einlassen von flüssigem oder gasförmigem karbonisierendem Fluid (CF2, CF3), und
• den primären ersten Auslass (112);
wobei das System bevorzugt Folgendes umfasst
- einen primären zweiten Reaktor (220), umfassend
• einen primären sechsten Einlass (161) zum Einlassen eines teilweise karbonisierten Gemisches (PCM),
• einen primären siebten Einlass (171) zum Einlassen von flüssigem oder gasförmigem karbonisierendem Fluid (CF2), und
• einen primären dritten Auslass (132) zum Ablassen von weiter karbonisiertem Gemisch (FCM).

19. System nach irgendeinem der Ansprüche 15 bis 18, wobei
die sekundäre erste Einlassanordnung (511) einen Einlass zum Einlassen der ersten Feststofffraktion (SF1) und einen weiteren Einlass zum Einlassen von zweitem Wasser (W2) umfasst.

## Revendications

1. Procédé de fabrication de matériau carboné, le procédé comprenant
- le mélange d'une composition solide (SC) avec une première eau (W1) pour former un mélange carbonatable (M2C), la composition solide (SC) comprenant un composé comprenant un élément choisi dans le groupe I ou II du tableau périodique d'éléments à l'exclusion de l'hydrogène,
- l'ajout d'un fluide de carbonatation liquide ou gazeux (CF) au mélange carbonatable (M2C) pour carbonater le mélange carbonatable (M2C) dans un agencement de réacteur primaire pour former un mélange carbonaté (CM), le fluide de carbonatation (CF) comprenant au moins 1 % en volume de dioxyde de carbone (CO₂), de sorte que le pH du mélange carbonaté (CM) est inférieur à 9,
- la séparation d'une première fraction d'eau (WF1) et d'une première fraction solide (SF1) du mélange carbonaté (CM) à l'aide d'un appareil de déshydratation primaire,
- l'ajout d'une seconde eau (W2) à la première fraction solide (SF1) pour former une boue comprenant au moins une partie du mélange carbonaté (CM), puis
- l'ajout d'un stabilisant (S) comprenant du fer (Fe) à la boue comprenant au moins une partie du mélange carbonaté (CM) pour stabiliser le mélange carbonaté (CM) dans un agencement de réacteur secondaire pour produire un mélange (MA) comprenant le matériau carboné.

2. Procédé selon la revendication 1, dans lequel
- le stabilisant comprend du fer (Fe) ayant le nombre d'oxydation zéro, +2 ou +3 ;
de préférence,
- le stabilisant comprend du fer (Fe) ayant le nombre d'oxydation zéro ou +2 ; plus préférablement,
- le stabilisant comprend du fer élémentaire (Fe) ou du sulfate de fer (FeSO₄).

3. Procédé selon la revendication 1 ou 2, comprenant
- la carbonatation du mélange carbonatable (M2C) avec un gaz comprenant du dioxyde de carbone (CO₂) ;
de préférence, le procédé comprend
- la combustion de combustible (F) pour produire du gaz de combustion (FG) et
- l'utilisation d'au moins une partie du gaz de combustion (FG) comme fluide de carbonatation (CF) ou comme partie du fluide de carbonatation (CF),
plus préférablement, le procédé comprend
- la combustion de combustible (F) pour produire du gaz de combustion (FG),
- le nettoyage du gaz de combustion (FG) pour produire du gaz de combustion nettoyé (CFG), et
- l'utilisation d'au moins une partie du gaz de combustion nettoyé (CFG) comme fluide de carbonatation (CF) ou comme partie du fluide de carbonatation (CF).

4. Procédé selon l'une quelconque des revendications 1 à 3, dans lequel la composition solide (SC) comprend
- au moins 10 % en poids de potassium, de sodium, de calcium et de magnésium au total ;
de préférence, la composition solide (SC) comprend
- au moins 10 % en poids de calcium et de magnésium au total ;
plus préférablement, la composition solide (SC) comprend
- au moins 10 % en poids de calcium, ou
- au moins 10 % en poids de magnésium.

5. Procédé selon l'une quelconque des revendications 1 à 4, dans lequel la composition solide (SC) comprend
- du cuivre (Cu), du plomb (Pb), du zinc (Zn), du chrome (Cr) ou de l'antimoine (Sb), ou un composé comprenant l'un quelconque de ceux-ci (Cu, Pb, Zn, Cr, Sb) ;
de préférence,
- la composition solide (SC) comprend
- du chrome (Cr), de l'antimoine (Sb) ou un composé comprenant l'un quelconque de ceux-ci (Cr, Sb) ;
plus préférablement, le procédé comprend
- la stabilisation du mélange carbonaté (CM) en réduisant le chrome hexavalent (Cr-VI) du mélange carbonaté (CM) en chrome trivalent (Cr-III).

6. Procédé selon l'une quelconque des revendications 1 à 5, dans lequel
- la composition solide (SC) comprend des cendres (ASH) et/ou des résidus de contrôle de la pollution atmosphérique (APCR) ;
de préférence, le procédé comprend
- la combustion de combustible (F) pour produire du gaz de combustion (FG) et au moins un élément parmi des cendres (ASH) et des résidus de contrôle de la pollution atmosphérique (APCR), dont au moins un (ASH, APCR) est constitué de la composition solide (SC) et
- l'utilisation d'au moins une partie du gaz de combustion (FG) comme fluide de carbonatation (CF) ou comme partie du fluide de carbonatation (CF).

7. Procédé selon l'une quelconque des revendications 1 à 6, comprenant
- le mélange de la composition solide (SC) avec la première eau (W1) pour former le mélange carbonatable (M2C) ayant une teneur en matière sèche de 20 % en poids à 40 % en poids.

8. Procédé selon l'une quelconque des revendications 1 à 7, comprenant
- l'ajout du fluide de carbonatation (CF) au mélange carbonatable (M2C) ayant une température de +1 °C à +60 °C.

9. Procédé selon l'une quelconque des revendications 1 à 8, comprenant
- l'ajout du stabilisant (S) au mélange carbonaté (CM) de sorte qu'un poids total du fer (Fe) et/ou du composé comprenant le fer (Fe) est de 2 % à 8 % du poids de la boue comprenant au moins une partie du mélange carbonaté (CM) ;
de préférence,
- une teneur en matière sèche de la boue comprenant au moins une partie du mélange carbonaté (MC) est de 15 % en poids à 35 % en poids.

10. Procédé selon l'une quelconque des revendications 1 à 9, dans lequel
- le mélange carbonatable (M2C) a une teneur en matière sèche de 20 % en poids à 40 % en poids ;
de préférence, le procédé comprend
- l'utilisation d'au moins une partie de la première fraction d'eau (WF1) comme au moins une partie de la première eau (W1).

11. Procédé selon la revendication 10, dans lequel
- une teneur en chlorure (Cl⁻) dans le mélange carbonaté avant la séparation de la première fraction d'eau (WF1) et de la première fraction solide (SF1) de celle-ci est supérieure à une teneur en chlorure (Cl⁻) dans la boue comprenant au moins une partie du mélange carbonaté (CM).

12. Procédé selon l'une quelconque des revendications 1 à 11, comprenant
- la séparation d'une seconde fraction d'eau (WF2) et d'une seconde fraction solide (SF2) du mélange (MA) comprenant le matériau carboné, dans lequel
- la seconde fraction solide (SF2) comprend au moins une partie du matériau carboné ;
de préférence, le procédé comprend
- l'utilisation d'au moins une partie de la seconde fraction d'eau (WF2) comme au moins une partie de la première eau (W1) ou comme au moins une partie de la seconde eau (W2).

13. Procédé selon l'une quelconque des revendications 1 à 12, comprenant
- dans une première phase, l'ajout d'un fluide de carbonatation primaire (CF1) au mélange carbonatable (M2C) pour carbonater le mélange carbonatable afin de former un mélange partiellement carbonaté (PCM), le fluide de carbonatation primaire comprenant au moins 1 % en volume de dioxyde de carbone (CO₂),
- le transfert du mélange partiellement carbonaté (PCM) vers une deuxième phase,
- dans la deuxième phase, l'ajout d'un fluide de carbonatation secondaire (CF2) au mélange partiellement carbonaté (PCM) pour carbonater le mélange partiellement carbonaté afin de former le mélange carbonaté (CM) ou un mélange carbonaté supplémentaire (FCM), le fluide de carbonatation secondaire (CF2) comprenant au moins 1 % en volume de dioxyde de carbone (CO₂) ;
de préférence, le procédé comprend
- le transfert du mélange carbonaté supplémentaire (FCM) vers une troisième phase, et
- dans la troisième phase, l'ajout d'un fluide de carbonatation tertiaire (CF3) au mélange carbonaté supplémentaire (FCM) pour carbonater le mélange carbonaté supplémentaire (FCM) afin de former le mélange carbonaté (CM), le fluide de carbonatation tertiaire (CF3) comprenant au moins 1 % en volume de dioxyde de carbone (CO₂) ET/OU
- le transport de gaz de la deuxième phase à la première phase pour être utilisé comme au moins une partie du fluide de carbonatation primaire (CF1) ;
plus préférablement,
- au moins l'un du fluide de carbonatation primaire, du fluide de carbonatation secondaire et du fluide de carbonatation tertiaire comprend du gaz de combustion ; plus préférablement,
- au moins le fluide de carbonatation primaire et le fluide de carbonatation secondaire comprennent du gaz de combustion.

14. Procédé selon l'une quelconque des revendications 1 à 13, comprenant
- l'ajout du fluide de carbonatation (CF) au mélange carbonatable (M2C) de sorte que le pH du mélange carbonaté (CM) est au plus égal à 8 ;
de préférence,
- un pH du mélange carbonaté (CM) est compris entre 6,0 et 8,0 et/ou
- un pH du mélange carbonatable (M2C) est supérieur à 9, plus préférablement supérieur à 10.

15. Système (900) de fabrication de matériau carboné, le système comprenant
- un agencement de réacteur primaire (100) comprenant
• une première entrée primaire (111) pour laisser entrer une composition solide (SC),
• une deuxième entrée primaire (121) pour laisser entrer la première eau (W1),
• une troisième entrée primaire (131) pour laisser entrer un fluide de carbonatation liquide ou gazeux (CF, CF1) comprenant au moins 1 % en volume de dioxyde de carbone (CO₂), et
• une première sortie primaire (112) pour laisser sortir un mélange carbonaté (CM),
• l'agencement de réacteur primaire (100) étant configuré pour former le mélange carbonaté (CM) par carbonatation d'un mélange comprenant la composition solide (SC) et la première eau (W1) avec le fluide de carbonatation (CF, CF1),
- un agencement de réacteur secondaire (500) comprenant
• un premier agencement d'entrée secondaire (511) pour laisser entrer une boue comprenant au moins une partie du mélange carbonaté (CM) pouvant être reçu à partir de la première sortie primaire (112),
• une seconde entrée secondaire (521) pour laisser entrer le stabilisant (S) comprenant du fer (Fe), et
• une sortie secondaire (512) pour laisser sortir un mélange (MA) comprenant le matériau carboné,
• l'agencement de réacteur secondaire (500) étant configuré pour stabiliser la boue comprenant au moins une partie du mélange carbonaté (CM) par le stabilisant (S),
- un appareil de déshydratation primaire (310) pour séparer une première fraction d'eau (WF1) et une première fraction solide (SF1) du mélange carbonaté (CM), et
- un convoyeur configuré pour transporter la première fraction solide (SF1) vers l'agencement de réacteur secondaire (500).

16. Système selon la revendication 15, comprenant
- un pipeline configuré pour transporter au moins une partie de la première fraction d'eau (WF1) de l'appareil de déshydratation primaire (310) vers la deuxième entrée primaire (121).

17. Système selon la revendication 15 ou 16, comprenant
- un appareil de déshydratation secondaire (410) pour séparer une seconde fraction d'eau (WF2) et une seconde fraction solide (SF2) du mélange (MA) comprenant le matériau carboné ;
de préférence, le système comprend
- un pipeline configuré pour transporter au moins une partie de la seconde fraction d'eau (WF2) de l'appareil de déshydratation secondaire (410) vers la deuxième entrée primaire (121) et/ou
- un pipeline configuré pour transporter au moins une partie de la seconde fraction d'eau (WF2) de l'appareil de déshydratation secondaire (410) vers le premier agencement d'entrée secondaire (511).

18. Système selon l'une quelconque des revendications 15 à 17, l'agencement de réacteur primaire (100) comprend
- un premier réacteur primaire (210) comprenant,
• la troisième entrée primaire (131) et
• une deuxième sortie primaire (122) pour laisser sortir le mélange partiellement carbonaté (PCM) et
- un dernier réacteur primaire (230) comprenant,
• une quatrième entrée primaire (141) pour laisser entrer le mélange partiellement carbonaté (PCM, FCM),
• une cinquième entrée primaire (151) pour laisser entrer le fluide de carbonatation liquide ou gazeux (CF2, CF3), et
• la première sortie primaire (112) ;
de préférence, le système comprend
- un second réacteur primaire (220) comprenant,
• une sixième entrée primaire (161) pour laisser entrer le mélange partiellement carbonaté (PCM),
• une septième entrée primaire (171) pour laisser entrer le fluide de carbonatation liquide ou gazeux (CF2), et
• une troisième sortie primaire (132) pour laisser sortir le mélange carbonaté supplémentaire (FCM).

19. Système selon l'une quelconque des revendications 15 à 18, dans lequel
- le premier agencement d'entrée secondaire (511) comprend une entrée pour laisser entrer la première fraction solide (SF1) et une autre entrée pour laisser entrer la seconde eau (W2).
